# EUROPÄISCHE PATENTANMELDUNG

(11) **EP 2 781 295 A1**
(43) Veröffentlichungstag der Anmeldung: **24.09.2014**
(21) Anmeldenummer: 13160193.2
(22) Anmeldetag: 20.03.2013
(51) Int. Cl.: B23K 26/32, B23K 26/34, B23K 26/00, C22F 3/02

(54) **Mehrfache Ausrichtung der Einstellung eines Schweißstrahls in Dendritenorientierung beim Schweißen von gerichtet erstarrten Werkstoffen**

(71) Anmelder: Siemens Aktiengesellschaft, 80333 München (DE)
(72) Erfinder: Burbaum, Dr. Bernd, 14612 Falkensee (DE)

(57) **Zusammenfassung**

Durch die der Dendritenorientierung angepasste Orientierung des Laserstrahls (16) in verschiedenen Ebenen (13', 13''), die sich bei gekrümmten Flächen ändert und der Ausrichtung des Laserstrahls (16) zu dem Verlauf der Körner, werden große Temperaturgradienten erreicht und beim Schweißen wachsen dementsprechend gut die Körner aus dem Umschmelz- oder Auftragsgeschweißten Material daraus in der gewünschten Richtung.

## Beschreibung

Die Erfindung betrifft die mehrfache Ausrichtung eines Schweißstrahls beim Auf- oder Umschmelzen von gerichtet erstarrten Werkstoffen.

Gerichtet erstarrte Werkstoffe in kolumnarer Struktur sind bekannt für Turbinenschaufeln, bestehend aus Nickelbasissuperlegierungen.

Beim Wiederaufarbeiten nach längerem Einsatz, bei dem Risse umgeschmolzen werden oder Material ebenfalls in gerichtet erstarrter Struktur aufgetragen werden müssen, sind verschiedene Verfahren bekannt, wie z.B. das Laserschweißen.

Jedoch kommt es bei Schweißen von solchen Substraten oft zur Bildung von fehlorientierten Körnern, die die mechanischen Eigenschaften des Bauteils aus dem Substrat reduzieren.

Es ist daher Aufgabe der Erfindung, o.g. Problem zu lösen.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Durch das Verfahren werden fehlorientierte Körner vermieden.

Es zeigen:
- Figuren 1, 2, 3, 4: schematisch die Vorgehensweise beim erfindungsgemäßen Verfahren und
- Figur 5: eine Turbinenschaufel
- Figur 6: eine Liste von Superlegierungen.

Die Figuren und die Beschreibung stellen nur Ausführungsbeispiele der Erfindung dar.

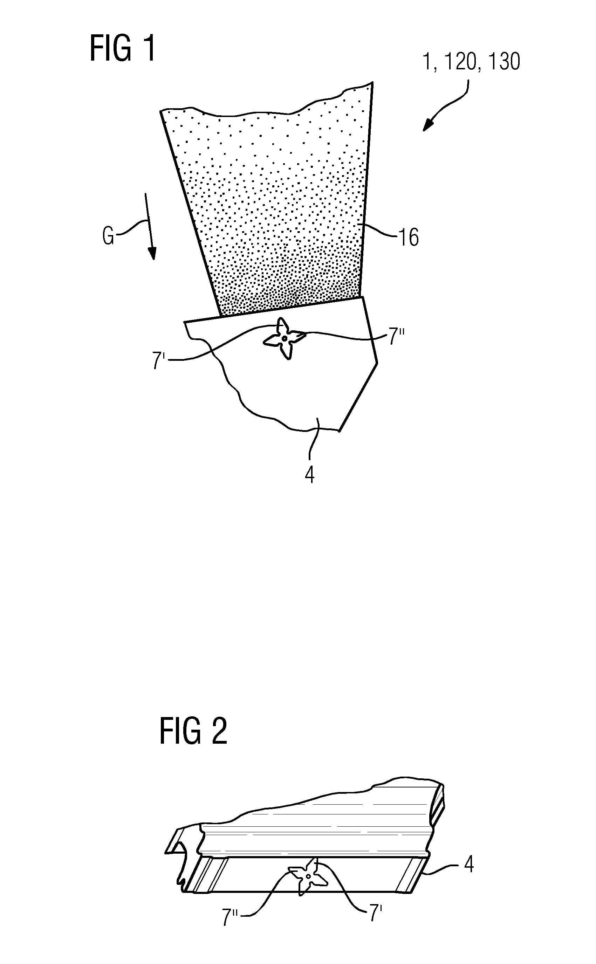

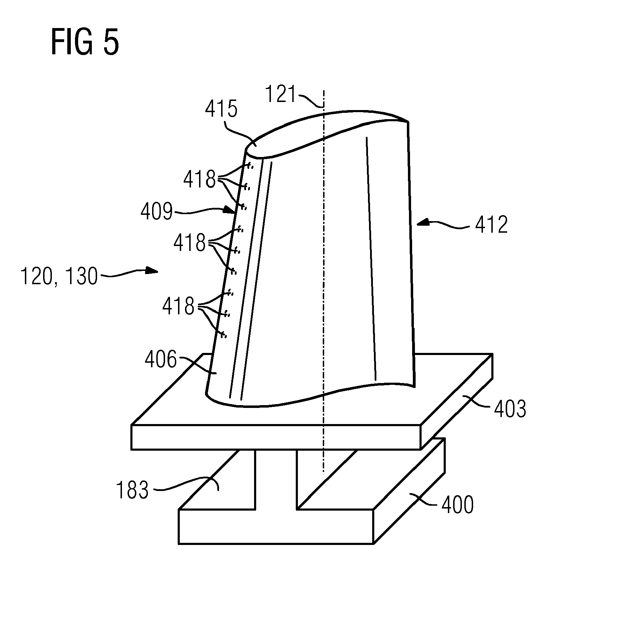

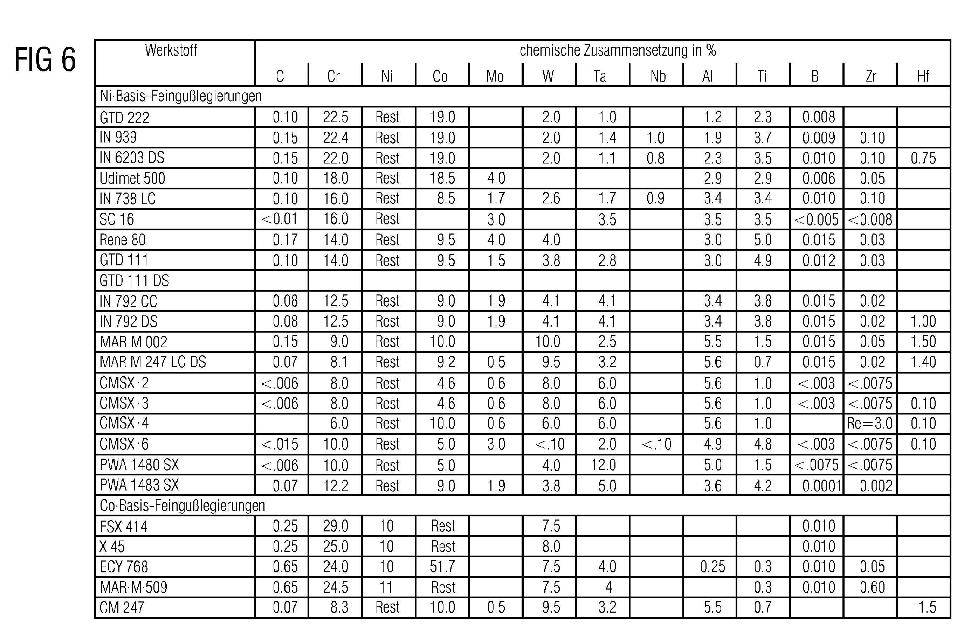

Ein Bauteil 1, 120, 130 (Fig. 1, 5) mit einer gerichtet erstarrten Struktur weist vorzugsweise eine nickelbasierte Superlegierung, insbesondere gemäß Figur 6, also eine Kolumnarstruktur oder eine einkristalline Struktur auf.

Die Erfindung wird nur beispielhaft anhand einer Turbinenschaufel 120, 130 erläutert.

Die Turbinenschaufel 120, 130 weist an einem entfernten Bereich einer zu schweißenden Oberfläche 10 einen Schaufelfuß 400 (Fig. 5) mit einer Grundfläche 4 (Fig. 2) auf, wobei die Grundfläche 4 vorzugsweise senkrecht zu der schweißenden Oberfläche 10 verläuft oder sonst wie die Orientierung der Grundfläche 4 zur schweißenden Oberfläche 10 bekannt ist.

Die Grundfläche 4 kann jedoch gleich zerstörend benutzt werden, um die Orientierung des Kristalls an der zu schweißenden Oberfläche 10 zu bestimmen.

Ebenso kann die Orientierung der Kristalle an der Oberfläche 10, die geschweißt werden soll, auch durch andere Messungen an oder mit der Oberfläche 10 oder auf andere Art und Weise durchgeführt werden.

Die Orientierung der Kristalle ist gekennzeichnet mit den Dendriten 7', 7''.

Der Temperaturgradient G ist für das gerichtet erstarrte Schweißen möglichst parallel zu einer Orientierung der Dendriten 7', 7'' zu halten (Fig. 1).

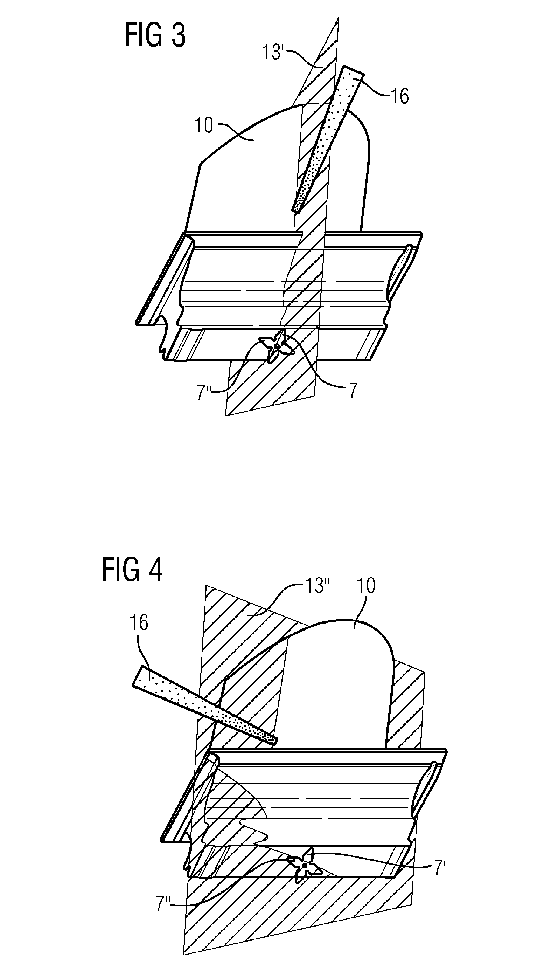

Die angedeutete erste Ebene 13' in Figur 3 gibt an, innerhalb welcher Ebene 13' sich ein Laserstrahl 16 als ein beispielhafter Energiestrahl bewegen muss.

Die Orientierung des Dendriten 7' bestimmt die Ebene 13' dadurch, dass die Orientierung des Dendriten 7' in der Ebene 13' liegt und die zur Orientierung des Dendriten 7' senkrechte Orientierung des Dendriten 7'' senkrecht auf der Ebene 13' steht.

Da die zu schweißende Oberfläche 10 gekrümmt ist und der Temperaturgradient möglichst senkrecht zur Hauptachse verlaufen soll, verändert sich die Ebene 13' in die zweite Ebene 13'' (Fig. 4), die zur ersten Ebene 13' senkrecht steht, da dann in solch einer Ebene nach dem Auf/Umschmelzen oder beim Auftragen wieder bevorzugt gerichtet erstarrte Strukturen wachsen können.

Hier wird vorzugsweise eine längliche Schweißnaht in Richtung Anströmkante/Abströmkante gelegt.

Neben der Änderung der Ebene 13', 13'', in der der Laserstrahl 16 verläuft, ist auch der Laserstrahl 16 innerhalb dieser Ebenen 13', 13'' vorzugsweise gekippt, was wiederum von der Orientierung der Dendriten 7', 7'' abhängt.

Die Verkippung des Laserstrahls 16 ist definiert durch einen Winkel zwischen Laserstrahl 16 und der Oberfläche 10 in der jeweiligen Ebene 13', 13'', der mindestens 5°, insbesondere mindestens 10° kleiner ist als 90°.

Anstatt Laserstrahlen können auch Elektronenstrahlen oder sonstige Strahlen eines anderen Schweißverfahrens verwendet werden.

Ebenso kann das Verfahren zum Umschmelzen von Rissen oder zum Auftragsschweißen von Material von gerichtet erstarrten Substraten verwendet werden.

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichtemachen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren
zum Schweißen von gerichtet erstarrten Strukturen eines Substrats (4) eines Bauteils (1, 120, 130) mittels eines energiereichen Strahls (16),
bei dem die zu schweißende Oberfläche (10) eine gekrümmte Oberfläche darstellt,
insbesondere konvex ausgeführt ist,
wobei der Energiestrahl (16) in Ebenen (13', 13'') verläuft,
wobei die Ebenen (13', 13'') durch die Dendritenorientierung (7', 7'') des oder der Kristalle des jeweiligen Substrats (4) des Bauteils (1, 120, 130) an der Oberfläche (10) bestimmt sind, wobei der Energiestrahl (16) beim Schweißen der Oberfläche (10) innerhalb der Ebenen (13', 13'') verläuft,
insbesondere nur in den Ebenen (13', 13'') verläuft, und wobei eine Ebene (13', 13'') zumindest einmal gewechselt wird.

2. Verfahren nach Anspruch 1,
bei dem der Energiestrahl (16) innerhalb der Ebene (13', 13'') verkippt ist.

3. Verfahren nach einem oder beiden der Ansprüche 1 oder 2, bei dem ein nickelbasiertes Substrat geschweißt wird.

4. Verfahren nach einem oder mehreren der Ansprüche 1, 2 oder 3,
bei dem eine kolumnare Struktur geschweißt wird.

5. Verfahren nach einem oder mehreren der Ansprüche 1, 2 oder 3,
bei dem eine einkristalline Struktur geschweißt wird.

6. Verfahren nach einem oder mehreren der vorherigen Ansprüche 1 bis 5,
bei dem eine Auftragsschweißung erfolgt.

7. Verfahren nach einem oder mehreren der vorherigen Ansprüche 1 bis 5,
bei dem eine Umschmelzung stattfindet.

8. Verfahren nach einem oder mehreren der vorherigen Ansprüche 1 bis 7,
bei dem ein Laserschweißverfahren durchgeführt wird.

9. Verfahren nach einem oder mehreren der Ansprüche 1 bis 8,
bei dem die zu schweißende Oberfläche (10) nur maximal 30%, insbesondere nur maximal 10%,
der Oberfläche des Bauteils (1, 120, 130) darstellt.

10. Verfahren nach einem oder mehreren der Ansprüche 1 bis 9,
bei dem die Schweißung bei einer Turbinenschaufel (120, 130) durchgeführt wird,
und insbesondere bei dem die Schweißung länglich ist und/oder längs ausgerichtet ist zwischen Anströmkante (409) und Abströmkante (412).
